# EUROPEAN PATENT APPLICATION

(11) **EP 3 214 691 A1**
(43) Date of publication of application: **06.09.2017**
(21) Application number: 15854206.8
(22) Date of filing: 24.09.2015
(51) Int. Cl.: H01M 10/6555, H01M 2/10, H01M 10/613, H01M 10/643, H01M 10/653, H01M 10/6551

(54) **BATTERY PACK AND HEAT DISSIPATING HOLDER**

(30) Priority: 29.10.2014 JP 2014220717
(71) Applicant: Sanyo Electric Co., Ltd., Osaka 574-8534 (JP)
(72) Inventor: MURAKAMI, Satoshi, Osaka-shi, Osaka 540-6207 (JP); TSUTSUMI. Takuya, Osaka-shi, Osaka 540-6207 (JP)
(74) Representative: Grünecker Patent- und Rechtsanwälte PartG mbB
(86) International application number: PCT/JP2015/004839
(87) International publication number: WO 2016/067517

(57) **Abstract**

A battery pack includes: a plurality of battery cells (1); and heat dissipating holder (2) that is disposed among battery cells (1) and is in contact with the battery cells (1) in a thermally coupled state. Heat dissipating holder (2) includes: holder body (3) having insertion holes into which battery cells (1) are inserted; and thermally-conductive insulating rubber (4) having elastic cylinders to be disposed on the inner surfaces of the insertion holes. Each elastic cylinder includes a plurality of elastic projections projecting on its inner surface. The inner shape of each elastic cylinder in a non-insertion state of battery cell (1) is made smaller than the outer shape of battery cell (1). In heat dissipating holder (2), battery cells (1) inserted into the elastic cylinders are disposed at fixed positions in the insulated state. The elastic projections are elastically pressed on and closely contact the periphery of battery cell (1). The thermal energy of battery cells (1) is conducted to holder body (3) via the elastic cylinders.

## Description

### TECHNICAL FIELD

The present invention relates to a battery pack including a plurality of battery cells disposed at fixed positions in a heat dissipating holder, and to the heat dissipating holder.

### BACKGROUND ART

The chargeable capacity and output of a battery pack can be increased by increasing the number of battery cells. In a battery pack having a large charge/discharge capacity or a large output, many battery cells are interconnected in series, in parallel, or in series and in parallel. In this battery pack, by disposing, among the battery cells, a heat dissipating material such as aluminum having a high thermal conductivity, the heat of the battery cells can be conducted to the heat dissipating material and the temperature increase of them can be restricted. By forming the heat dissipating material in a shape where the battery cells are disposed at fixed positions, the heat dissipation is allowed in a state where the battery cells are disposed at the fixed positions.

In order to achieve this objective, a battery pack in which a heat dissipating material is made to closely contact the surfaces of battery cells has been developed (Patent Literature 1).

In this battery pack, a heat dissipating material is disposed between stacked battery cells, and the heat of the battery cells is conducted to the heat dissipating material. Furthermore, this battery pack includes a thermally conductive rubber layer in order to improve the thermal conductivity between the heat dissipating material and the battery cells. The thermally-conductive rubber layer closely contacts the surfaces of the battery cells in a state where it is interposed between the battery cells, thereby improving the thermal conductivity. Especially, the stacked battery cells are tightened from both sides, and the thermally-conductive rubber layer can be made to closely contact the surfaces of the battery cells in an elastically pressed state. However, disadvantageously, in the battery pack having this structure, the battery cells are stacked and a heat dissipating material is disposed among the battery cells, so that the whole peripheries of the battery cells cannot come into contact with the heat dissipating material and the heat generated in the battery cells cannot be dissipated from the whole peripheries. In other words, the heat of the battery cells is conducted only in the stacking direction in this battery pack, so that the temperature difference between the battery cells is large in the structure where the battery cells are arranged in multiple rows and columns. That is because the heat of the battery cells is conducted only in the column direction, namely in the stacking direction, and cannot be conducted in the row direction orthogonal to the column direction. In this structure, the battery cells are stacked and a heat dissipating material is disposed between the battery cells. Therefore, disadvantageously, available battery cells are limited to square cells, cylindrical cells are not available, and the battery cells cannot be disposed at fixed positions via a heat dissipating material.

A battery pack in which cylindrical battery cells are disposed at fixed positions via a heat dissipating material has been developed (Patent Literature 2).

In this battery pack, battery cells can be disposed between wave-shaped heat dissipating materials and disposed at fixed positions. In this battery pack, the shape of the heat dissipating material is set as a wave shape and cylindrical cells are disposed on the opposite surfaces of the heat dissipating material, so that the battery cells can be disposed at the fixed positions. However, when this battery pack has a structure where the battery cells are arranged in multiple rows and columns, disadvantageously, the heat cannot be conducted both in the row direction and in the column direction and the heat of all battery cells cannot be dissipated uniformly. Disadvantageously, this battery pack cannot effectively prevent the induction of a thermal runaway of a battery cell because a heat dissipating material is not disposed among all battery cells.

A battery pack capable of preventing the induction of a thermal runaway of a battery cell has been developed (Patent Literature 3).

In this battery pack, a heat dissipating material includes insertion holes into which cylindrical battery cells are inserted, the battery cells are inserted into the insertion holes. Therefore, this battery pack can prevent the induction of a thermal runaway of a battery cell. That is because the heat dissipating material exists around a battery cell having exhibited a thermal runaway and absorbs the thermal energy of the battery cell. Furthermore, in the battery pack having this structure, the cylindrical battery cells are arranged in multiple rows and columns, and heat can be dissipated from the whole periphery of each battery cell. Therefore, the thermal energy of the battery cells can be conducted both in the row direction and in the column direction. In the battery pack having this structure, however, it is difficult to insert the battery cells into insertion holes and make the whole peripheries of the battery cells closely contact the inner surfaces of the insertion holes in a thermally coupled state. Therefore, disadvantageously, the whole peripheries of the battery cells cannot closely contact the heat dissipating material and the generated heat cannot be effectively conducted to the heat dissipating material. Especially, the cylindrical battery cells have a dimension error in a manufacturing process, and the insertion holes in the heat dissipating material also have a dimension error in the manufacturing process. Therefore, the battery cells cannot be inserted in the state where the battery cells closely contact the insertion holes. Aluminum having a high thermal conductivity is frequently used as the heat dissipating material, so that a large amount of heat dissipating material is produced by drawing the aluminum. In this manufacturing process, the insertion holes in the heat dissipating material made of aluminum have a significant dimension error. Therefore, the battery pack where cylindrical battery cells are inserted into the insertion holes can achieve a feature of disposing the battery cells at fixed positions, but cannot achieve the condition in which the battery cells are smoothly inserted into the insertion holes to provide an ideal thermally-coupled state. Furthermore, since a metal such as aluminum having a high thermal conductivity is used as the heat dissipating material, adjacent battery cells cannot be disposed in an insulated state. Therefore, in a battery pack where adjacent battery cells are interconnected in series, disadvantageously, an exterior can of the battery cells comes into contact with the heat dissipating material made of aluminum, and a large short-circuit current flows.

### Citation List

### Patent Literature

**PTL 1:** Unexamined Japanese Patent Publication No. 2014-10939
**PTL 2:** Unexamined Japanese Patent Publication No. 2011-9477
**PTL 3:** Unexamined Japanese Patent Publication No. 2005-285456

### SUMMARY OF THE INVENTION

### TECHNICAL PROBLEM(S)

A conventional battery pack, therefore, has the following disadvantages: heat cannot be efficiently dissipated from the whole peripheries of battery cells; the induction of a thermal runaway of a battery cell cannot be certainly prevented and a high safety is not achieved; and the battery cells interconnected in series cannot be disposed at fixed positions while the short-circuit between the battery cells is certainly prevented.

The present invention has been developed for addressing these disadvantages of the conventional battery packs. An important objective of the present invention is to provide a battery pack and heat dissipating holder that have the following features:
the temperature increase can be reduced by efficiently dissipating the heat generated in the battery cells from their whole peripheries;
a high safety is achieved by certainly preventing also the induction of a thermal runaway of a battery cell; and
the battery cells can be smoothly inserted into fixed positions in the heat dissipating holder and can be disposed at the fixed positions in the insulated state.

### SOLUTION(S) TO PROBLEM(S)

A battery pack of the present invention includes: a plurality of chargeable/dischargeable battery cells; and a heat dissipating holder that is disposed among the battery cells and is in contact with the battery cells in a thermally coupled state. The heat dissipating holder includes: a holder body having insertion holes into which the battery cells are inserted; and a thermally-conductive insulating rubber having elastic pipes to be disposed on the inner surfaces of the insertion holes. Each elastic pipe includes a plurality of elastic projections that project on its inner surface and are elastically pressed on the surface of each battery cell. The inner shape of the elastic pipe in a non-insertion state of the battery cell is made smaller than the outer shape of the battery cell. In the heat dissipating holder, the battery cells inserted into the elastic pipes are disposed at fixed positions in the insulated state. The elastic projections are elastically pressed on the periphery of the battery cell, and closely contact the battery cell in a thermally coupled state. The thermal energy of the battery cells is conducted to the holder body via the elastic pipes.

A battery pack in accordance with another aspect of the present invention includes: a plurality of chargeable/dischargeable battery cells; and a heat dissipating holder that is disposed among the battery cells and is in contact with the battery cells in a thermally coupled state. The heat dissipating holder includes: a holder body having insertion holes into which the battery cells are inserted; and a thermally-conductive insulating rubber having elastic pipes to be disposed on the inner surfaces of the insertion holes. The holder body is a stacked body that is formed by stacking a plurality of thermally conductive plates, and each thermally conductive plate includes, in a predetermined array, a plurality of through holes into which the battery cells are inserted. The thermally-conductive insulating rubber is a stacked body of a plurality of insulating plates, and each insulating plate includes insulating rings to be disposed on the inner surfaces of the through holes in the corresponding thermally conductive plate. In the heat dissipating holder, in a state where the thermally conductive plates and insulating plates are stacked in the longitudinal direction of the battery cells, an insertion hole is formed of one of the stacked through holes in the thermally conductive plates, and an elastic pipe is formed of one of the stacked insulating rings in the insulating plates. In the heat dissipating holder, the battery cells inserted into the elastic pipes are disposed at fixed positions in the insulated state, and the thermal energy of the battery cells is conducted to the holder body via the elastic pipes.

A heat dissipating holder of the present invention is disposed among a plurality of battery cells, and is in contact with the battery cells in a thermally coupled state. The heat dissipating holder includes: a holder body having insertion holes into which the battery cells are inserted; and a thermally-conductive insulating rubber including elastic pipes to be disposed on the inner surfaces of the insertion holes. Each elastic pipe includes a plurality of elastic projections that project on its inner surface and are elastically pressed on the surface of each battery cell. The inner shape of the elastic pipe in a non-insertion state of the battery cell is made smaller than the outer shape of the battery cell. The battery cells inserted into the elastic pipes are disposed at fixed positions in the insulated state. The elastic projections are elastically pressed on the periphery of each battery cell, and closely contact the battery cell in a thermally coupled state. The thermal energy of the battery cells is conducted to the holder body via the elastic pipes.

A heat dissipating holder in accordance with another aspect of the present invention is disposed among a plurality of battery cells, and is in contact with the battery cells in a thermally coupled state. The heat dissipating holder includes: a holder body having insertion holes into which the battery cells are inserted; and a thermally-conductive insulating rubber including elastic pipes to be disposed on the inner surfaces of the insertion holes. The holder body is a stacked body that is formed by stacking a plurality of thermally conductive plates, and each thermally conductive plate includes, in a predetermined array, a plurality of through holes into which the battery cells are inserted. The thermally-conductive insulating rubber is a stacked body of a plurality of insulating plates, and each insulating plate includes insulating rings to be disposed on the inner surfaces of the through holes in the corresponding thermally conductive plate. In a state where the thermally conductive plates and insulating plates are stacked in the longitudinal direction of the battery cells, an insertion hole is formed of one of the stacked through holes in the thermally conductive plates, and elastic pipe is formed of one of the stacked insulating rings in the insulating plates. The battery cells inserted into the elastic pipes are disposed at fixed positions in the insulated state, and the thermal energy of the battery cells is conducted to the holder body via the elastic pipes.

### ADVANTAGEOUS EFFECT(S) OF INVENTION

A battery pack of the present invention have the following features:
the temperature increase can be reduced by efficiently dissipating the heat generated in the battery cells from their whole peripheries;
a high safety can be achieved by certainly preventing also the induction of a thermal runaway of a battery cell; and
the battery cells can be smoothly inserted into fixed positions in the heat dissipating holder and can be disposed at the fixed positions in the insulated state. That is because the battery pack of the present invention includes the following structure:
the heat dissipating holder includes a holder body having insertion holes and a thermally-conductive insulating rubber disposed in the insertion holes;
the thermally-conductive insulating rubber includes elastic pipes that are disposed on the inner surfaces of the insertion holes and are elastically pressed on the peripheries of the battery cells;
each elastic pipe includes a plurality of elastic projections that project on its inner surface and are elastically pressed on the periphery of each battery cell;
the inner shape of each elastic pipe having the plurality of projecting elastic projections is made smaller than the outer shape of each battery cell in a non-insertion state of the battery cell;
the battery cells are inserted into the elastic pipes, and are disposed at fixed positions via the elastic pipes in the insulated state;
the elastic projections are elastically pressed on the periphery of each battery cell and closely contact the battery cell in a thermally coupled state; and
the thermal energy of the battery cells is conducted to the holder body via the elastic pipes.

Especially, in a battery pack of the present invention, elastic pipes made of a thermally-conductive insulating rubber are disposed on the inner surfaces of the insertion holes, and each elastic pipe includes a plurality of elastic projections projecting toward the battery cell. Therefore, when the battery cells are inserted, the elastic projections are elastically deformed and the battery cells can be smoothly inserted, the elastic projections are made to closely contact the peripheries of the battery cells in the insertion state, and the heat generated in the battery cells is efficiently conducted to the holder body via the elastic pipes. Therefore, even when many battery cells are inserted into respective insertion holes and arranged in multiple rows and columns, whole peripheries of all battery cells are separated from each other via the heat dissipating holder, the thermal energy of the battery cells is efficiently conducted to the holder body to reduce the temperature increase of the battery cells, and also the induction of a thermal runaway of a battery cell can be certainly prevented.

In a battery pack in accordance with another aspect of the present invention, the temperature increase can be reduced by efficiently dissipating the heat generated in the battery cells from their whole peripheries, and a high safety can be achieved by certainly preventing also the induction of a thermal runaway of a battery cell. That is because the battery pack of the present invention includes the following structure:
the heat dissipating holder includes a holder body having insertion holes, and a thermally-conductive insulating rubber having elastic pipes on the inner surfaces of the insertion holes; and
the holder body is a stacked body that is formed by stacking a plurality of thermally conductive plates, and an insertion hole is formed of the stacked through holes.
Furthermore, that is because the battery pack includes the following structure:
the thermally-conductive insulating rubber is a laminated body of a plurality of insulating plates;
an elastic pipe is formed by stacking the insulating rings that are disposed in the inner surfaces of the through holes;
the battery cells inserted into the elastic pipes are disposed at fixed positions in the insulated state; and
the thermal energy of the battery cells is conducted to the holder body via the elastic pipes.

In a heat dissipating holder of the present invention, the battery cells are disposed at fixed positions, the temperature increase can be reduced by efficiently dissipating the heat generated in the battery cells from their whole peripheries, and a high safety can be achieved by certainly preventing also the induction of a thermal runaway of a battery cell. That is because the heat dissipating holder of the present invention includes the following structure:
the heat dissipating holder includes a holder body having insertion holes into which the battery cells are inserted, and a thermally-conductive insulating rubber including elastic pipes disposed in the insertion holes;
each elastic pipe includes a plurality of elastic projections that project on its inner surface and are elastically pressed on the surface of each battery cell; and
the inner shape of each elastic pipe in a non-insertion state of the battery cell is made smaller than the outer shape of the battery cell.
Furthermore, that is because the heat dissipating holder includes the following structure:
the battery cells inserted into the elastic pipes are disposed at fixed positions in the insulated state;
the elastic projections are elastically pressed on the periphery of each battery cell, and made to closely contact the battery cell in a thermally coupled state; and
the thermal energy of the battery cells is conducted to the holder body via the elastic pipes.
Especially, in the heat dissipating holder of the present invention, elastic pipes made of a thermally-conductive insulating rubber are disposed on the inner surfaces of the insertion holes, and each elastic pipe includes a plurality of elastic projections projecting toward the battery cell. Therefore, when the battery cells are inserted, the elastic projections are elastically deformed and the battery cells can be smoothly inserted, the elastic projections are made to closely contact the peripheries of the battery cells in the insertion state, and the heat generated in the battery cells is efficiently conducted to the holder body via the elastic pipes.

In a heat dissipating holder in accordance with another aspect of the present invention, the battery cells are disposed at fixed positions, the temperature increase can be reduced by efficiently dissipating the heat generated in the battery cells from their whole peripheries, and a high safety can be achieved by certainly preventing also the induction of a thermal runaway of a battery cell. That is because the heat dissipating holder of the present invention includes the following structure:
the heat dissipating holder includes a holder body having insertion holes into which the battery cells are inserted, and a thermally-conductive insulating rubber including elastic pipes disposed in the insertion holes; and
the holder body is a stacked body that is formed by stacking a plurality of thermally conductive plates, and an insertion hole is formed of stacked through holes in the thermally conductive plates.
Furthermore, that is because the heat dissipating holder includes the following structure:
the thermally-conductive insulating rubber is a laminated body of a plurality of insulating plates;
an elastic pipe is formed of the stacked insulating rings disposed on the inner surfaces of the through holes;
the battery cells inserted into the elastic pipes are disposed at fixed positions in the insulated state; and
the thermal energy of the battery cells is conducted to the holder body via the elastic pipes.

### BRIEF DESCRIPTION OF DRAWINGS

FIG. 1 is a perspective view of a battery pack in accordance with one example of the present invention.
FIG. 2 is a partially enlarged perspective view of a heat dissipating holder of the battery pack shown in FIG. 1.
FIG. 3 is an exploded perspective view of the heat dissipating holder shown in FIG. 2.
FIG. 4 is a partially enlarged vertical sectional view of the battery pack shown in FIG. 1.
FIG. 5 is a partially enlarged horizontal sectional view of the battery pack shown in FIG. 1.
FIG. 6 is a perspective view of a heat dissipating holder of a battery pack in accordance with another example of the present invention.
FIG. 7 is a partially enlarged vertical sectional view of the heat dissipating holder shown in FIG. 6.
FIG. 8 is an exploded perspective view of the heat dissipating holder shown in FIG. 6.
FIG. 9 is a schematic diagram showing the state where the thermal energy of a battery cell is conducted to its periphery in the battery pack in accordance with one example of the present invention.
FIG. 10 is a schematic diagram showing the state where the thermal energy of a battery cell is conducted to its periphery in a battery pack in accordance with another example of the present invention.

### DESCRIPTION OF EMBODIMENT(S)

Hereinafter, examples of the present invention are described with reference to the accompanying drawings. The following examples show battery packs for embodying the technical ideas of the present invention. The present invention is not limited to the following battery packs. In this description, members shown in the scope of claims are not limited to the members of the examples.

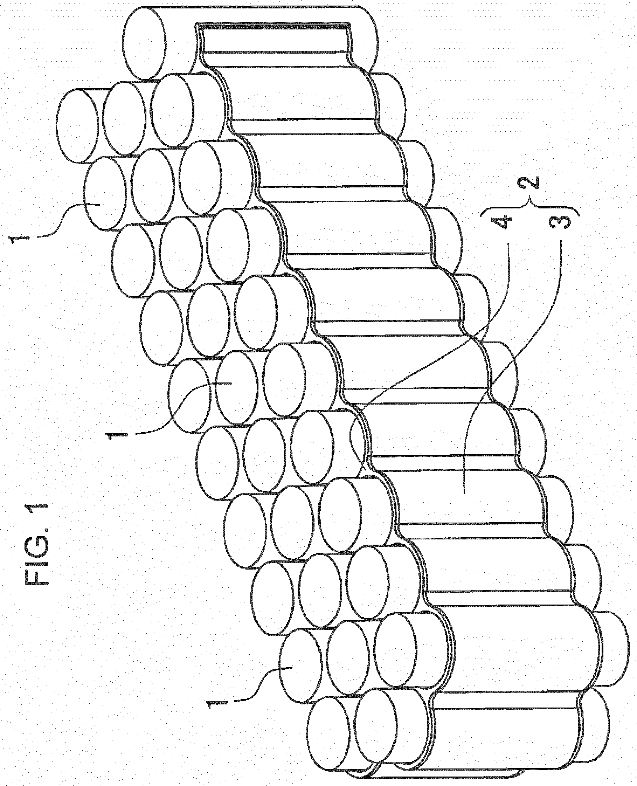

A battery pack shown in FIG. 1 includes a plurality of battery cells 1, and heat dissipating holder 2 in which battery cells 1 electrically interconnected in series and in parallel are disposed at fixed positions. Each battery cell 1 is a cylindrical lithium-ion secondary cell. As the cylindrical lithium-ion secondary cell, a cell frequently used as part number 18650 for various applications such as a laptop microcomputer, a bicycle, and an automobile can be employed. In the battery pack of the present invention, battery cell 1 is not limited to the cylindrical lithium-ion secondary cell. All cells that are currently used or will be developed can be employed, and all other chargeable/dischargeable secondary cells such as nickel-metal-hydride cells can be employed. Square cells may be employed instead of the cylindrical cells.

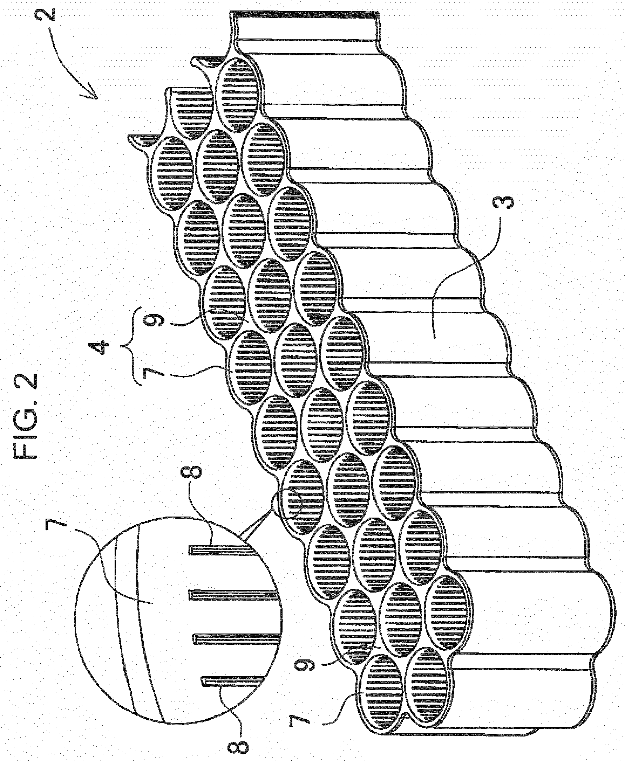

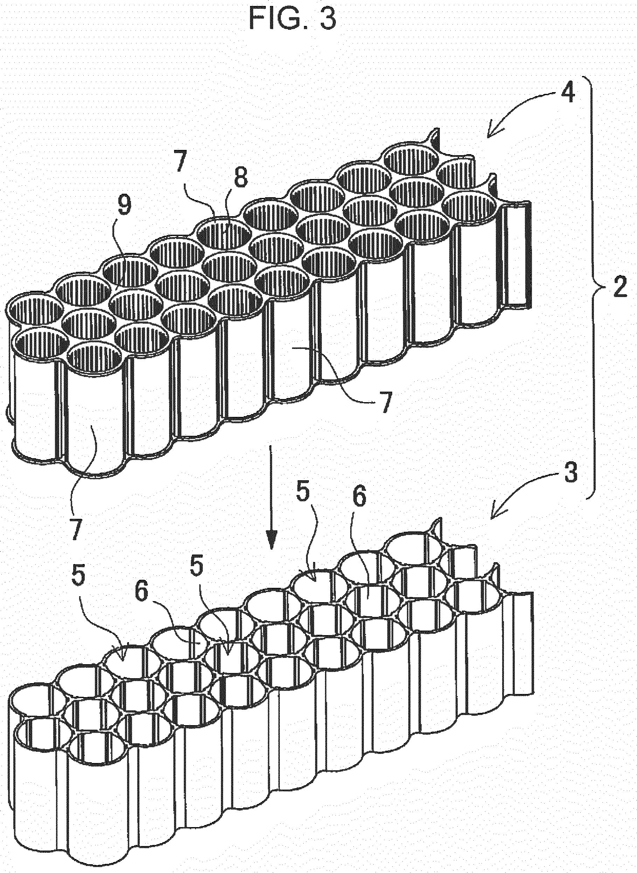

In heat dissipating holder 2, battery cells 1 are disposed at fixed positions. Heat dissipating holder 2 closely contacts all battery cells in a thermally coupled state, absorbs the thermal energy of each battery cell 1, and dissipates the heat. Heat dissipating holder 2 includes: holder body 3 having insertion holes 5 into which battery cells 1 are respectively and independently inserted; and thermally-conductive insulating rubber 4 that is made of an insulating rubber-like or rubbery elastic body and has elastic cylinders 7 as elastic pipes. Here, elastic cylinders 7 closely contact the inner surfaces of insertion holes 5 that are disposed in holder body 3. FIG. 2 is a perspective view of heat dissipating holder 2, and FIG. 3 is a perspective view showing the state where thermally-conductive insulating rubber 4 is separated from holder body 3.

Holder body 3 is produced by extrusion-molding a metal such as aluminum or an aluminum alloy, or by press-fitting it into a die. Furthermore, holder body 3 can be formed in a shape having insertion holes 5 by press-molding a metal plate such as aluminum or an aluminum alloy to form a plurality of through holes, and then by stacking a plurality of metal plates. Holder body 3 made of a metal, especially a metal such as aluminum or an aluminum alloy, has a high thermal conductivity [100-250 W/(m×K)]. Therefore, holder body 3 more efficiently absorbs the heat generated in each battery cell 1, effectively dissipates the heat, reduces the temperature increase of battery cells 1, and can reduce the temperature difference between battery cells 1. However, holder body 3 is not limited to a holder body made of a metal such as aluminum. For example, holder body 3 may be made of carbon having a high thermal conductivity [100-2000 W/(m×K)].

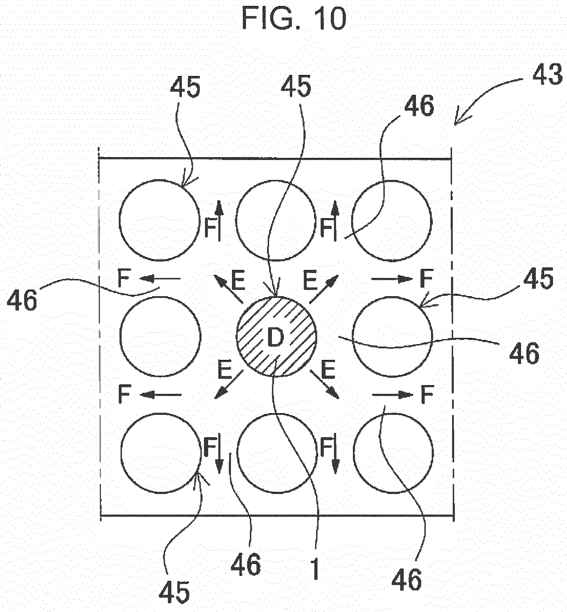

In heat dissipating holder 2 of FIG. 1 to FIG. 3, a plurality of battery cells 1 are inserted into insertion holes 5 in holder body 3, and are arranged into a heaped bale structure. In heat dissipating holder 2, battery cells 1 are arranged in a plurality of columns, and battery cells 1 on one column are arranged in the valleys between battery cells 1 on its adjacent column. In heat dissipating holder 2, many battery cells 1 can be arranged closely to each other, so that many battery cells 1 can be stored while the outer shape of heat dissipating holder 2 is reduced. In a heat dissipating holder, however, a plurality of battery cells 1 may be arranged vertically and horizontally in multiple rows and columns as shown in FIG. 10.

In holder body 3, battery cells 1 are inserted into insertion holes 5, and partitions 6 are disposed between all battery cells 1. Holder body 3 of FIG. 2 includes columnar insertion holes 5 having a diameter larger than the inner diameter of battery cells 1. Insertion holes 5 are arranged in parallel while each insertion hole 5 has openings in the opposite surfaces of holder body 3. Elastic cylinders 7 made of thermally-conductive insulating rubber 4 are disposed on the inner surfaces of insertion holes 5, and thermally-conductive insulating rubber 4 is disposed between insertion holes 5 and battery cells 1.

Thermally-conductive insulating rubber 4 is a silicon-based or fluorine-based rubber-like or rubbery elastic body. Thermally-conductive insulating rubber 4 has a high heat resistance. Therefore, it does not become deformed or degraded even in the state where battery cells 1 are at a high temperature, and effectively conducts the heat generated in battery cells 1 to holder body 3. Thermally-conductive insulating rubber 4 is a rubber-like or rubbery elastic body containing an added thermally conductive material, and can improve the thermal conductivity [0.1-3 W/(m×K)]. As the thermally conductive material, metal powder or inorganic powder can be used. However, thermally-conductive insulating rubber 4 requires an insulating property, so that battery cells 1 and holder body 3 are disposed in an insulated state by adding an insulating thermally conductive material or by reducing the additive amount of the thermally conductive material.

Thermally-conductive insulating rubber 4 is disposed on the inner surfaces of insertion holes 5, and a plurality of elastic cylinders 7 elastically pressed on the peripheries of battery cells 1 are interconnected via the ends of insertion holes 5. As shown in FIG. 2, FIG. 4, and FIG. 5, each elastic cylinder 7 includes a plurality of elastic projections 8 that project on its inner surface and are elastically pressed on the whole periphery of battery cell 1. Elastic cylinder 7 elastically becomes deformed by itself, allows battery cell 1 to be smoothly inserted into insertion hole 5, and is elastically pressed on the surface of inserted battery cell 1 and closely contacts it. Therefore, the inner shape of elastic cylinder 7 including a plurality of elastic projections 8 projecting on its inner surface is made 0.05-10% smaller than the outer shape of battery cell 1 in a non-insertion state of battery cell 1.

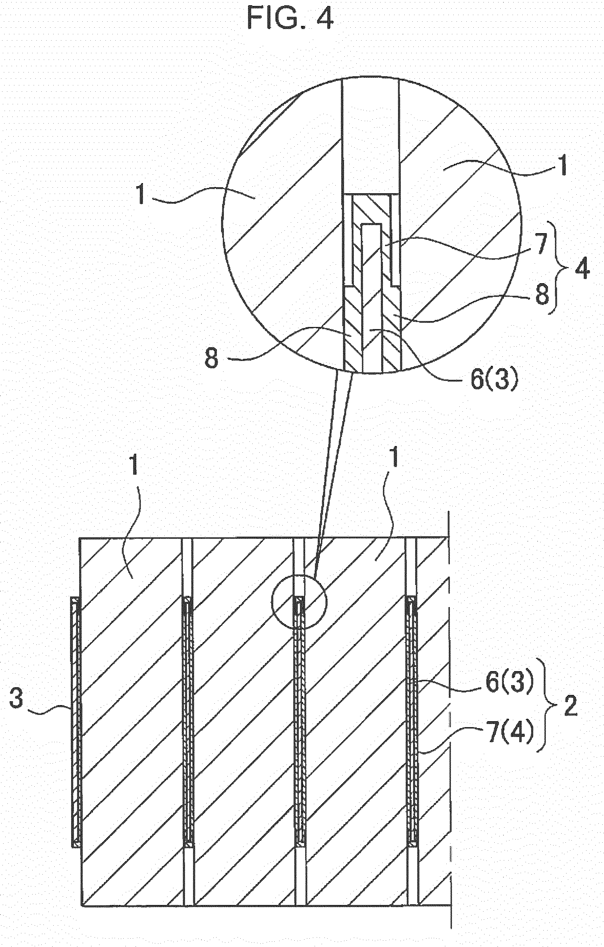

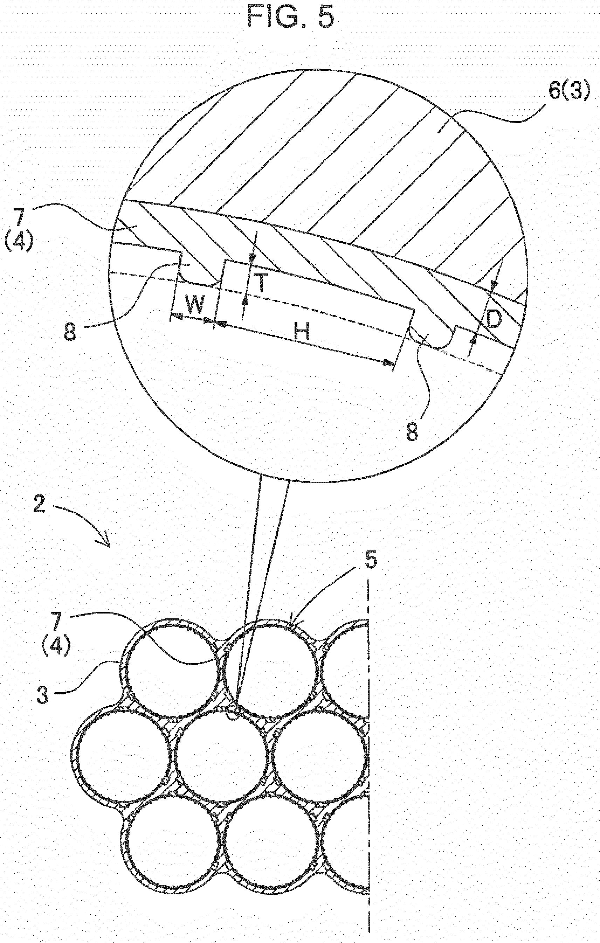

In thermally-conductive insulating rubber 4 shown by the partially enlarged perspective view of FIG. 2, elastic projections 8 disposed on the inner shape of elastic cylinder 7 are formed as a plurality of ridges extending in the longitudinal direction of battery cell 1. As shown in FIG. 4 and FIG. 5, the tip surfaces of the ridges are elastically pressed on the surface of battery cell 1, and closely contact the surface of battery cell 1. Since elastic projections 8 are formed as the ridges extending in the insertion direction of battery cell 1 in thermally-conductive insulating rubber 4, battery cell 1 can be smoothly inserted into elastic cylinder 7 and elastic projections 8 can be made to closely contact the whole periphery of battery cell 1.

The outer peripheral surface of elastic cylinder 7 closely contacts the inner surface of insertion hole 5 of holder body 3 in a surface contact state, and efficiently conducts, to holder body 3, the thermal energy coming from battery cell 1. The outer shape of elastic cylinder 7 is made equal to the inner shape of insertion hole 5, or is made slightly larger than the inner shape by about 1%. Elastic cylinder 7 can be thus inserted into insertion hole 5, and its outer peripheral surface can be made to closely contact the inner surface of insertion hole 5. Alternatively, by insert-molding holder body 3 in thermally-conductive insulating rubber 4, elastic cylinder 7 can be made to closely contact the inner surface of insertion hole 5. Although not shown, elastic projections may be also disposed on the outer peripheral surface of the elastic cylinder, and may be made to closely contact the inner surface of the insertion hole. By forming the outside elastic projections as the ridges extending in the axial direction of the insertion hole, the elastic cylinder can be smoothly inserted into the insertion hole.

The thermal energy coming from battery cell 1 can be efficiently conducted, by reducing the projection height of elastic projections 8 in elastic cylinder 7, increasing the adhesion surface area to battery cell 1, and reducing the thickness of elastic cylinder 7. When elastic projections 8 are excessively low, elastic projections 8 becomes elastically deformed, cannot sufficiently absorb the dimension error between battery cell 1 and holder body 3, and cannot make elastic projections 8 closely contact the inner surface of battery cell 1. The projection height of elastic projections 8, the contact surface area with battery cell 1, and the thickness of elastic cylinder 7 are set at dimensions allowing elastic projections 8 to closely contact the surface of battery cell 1 in consideration of the error between battery cells 1 and holder body 3 in a manufacturing process.

For example, thermally-conductive insulating rubber 4 has the following dimensions as shown in the partially enlarged view of FIG. 5. Projection height (T) of elastic projections 8 as the ridges is 0.1 mm or more and less than 1.0 mm. Width (W) of the ridges and interval (H) between the ridges are 0.5 mm or more and 5 mm or less. Thickness (D) of a part of elastic cylinder 7 that has no projection, namely the thickness of elastic cylinder 7, is 0.2 mm or more and less than 2.0 mm. Thus, elastic projections 8 are made to closely contact the surface of battery cell 1, and the heat generated in battery cells 1 can be efficiently conducted to holder body 3. The ratio between width (W) of the ridges and interval (H) between the ridges is set at 2:1 to 1:5. When the percentage of width (W) of the ridges becomes smaller, the surface area closely adhering to battery cell 1 becomes small and the heat generated in battery cell 1 cannot be efficiently conducted to holder body 3. When the percentage of width (W) of the ridges becomes larger, battery cell 1 cannot be smoothly inserted into insertion hole 5. In the present invention, however, the height of elastic projections 8 and the thickness of elastic cylinder 7 are not specified. These values are set at optimal values in consideration of the elasticity of thermally-conductive insulating rubber 4 and the dimension error between battery cells 1 and holder body 3 in the manufacturing process.

In above-mentioned thermally-conductive insulating rubber 4, elastic projections 8 disposed on the inner surface of elastic cylinder 7 are formed as ridges extending in the insertion direction of battery cell 1. However, elastic projections 8 are not limited to this shape. For example, elastic projections 8 may be ridges extending in the circumference direction, or may be countless projections that independently project on the inner surface. In thermally-conductive insulating rubber 4 of FIG. 4, elastic cylinder 7 has a columnar shape and its outside surface closely contacts the inner surface of insertion hole 5 of holder body 3 in the surface contact state, and elastic projections 8 disposed on the inner surface of elastic cylinder 7 are ridges and closely contact the whole periphery of battery cell 1. Therefore, the heat coming from battery cell 1 can be efficiently conducted to elastic cylinder 7, and the heat of elastic cylinder 7 can be efficiently conducted to holder body 3 to which elastic cylinder 7 closely adheres in the surface contact state. As a result, the heat generated in battery cell 1 can be efficiently conducted to holder body 3.

In thermally-conductive insulating rubber 4 shown in FIG. 2 and FIG. 3, holder body 3 is insert-molded and fixed. Thermally-conductive insulating rubber 4 is molded by temporarily fixing holder body 3 at a fixed position in a molding chamber of a die for molding thermally-conductive insulating rubber 4, and by injecting a liquid or paste-like resin into the molding chamber. The resin to be injected into the molding chamber is a heated and molten thermoplastic resin, or a resin taking a paste form in an uncured state. Heat dissipating holder 2 is produced by curing or cooling the resin injected into the molding chamber, then taking the resin out of the molding chamber, and insert-molding holder body 3 at the fixed position.

In heat dissipating holder 2 shown in the sectional views of FIG. 2 and FIG. 3, the gaps between insertion holes 5 are covered with connection portion 9 of thermally-conductive insulating rubber 4. Connection portion 9 is connected to the opposite ends of elastic cylinders 7 to cover the gaps between insertion holes 5. Heat dissipating holder 2 can more certainly hold battery cells 1 inserted into insertion holes 5 in an insulated state. That is because connection portion 9 can prevent the opening edges of insertion holes 5 from coming into contact with the exterior can of battery cells 1. Furthermore, when battery cells 1 are inserted into insertion holes 5, displacement of battery cells 1 can be prevented. Although not shown, one-side ends of the elastic cylinders are interconnected via the connection portion in a heat dissipating holder that is produced by the following processes: separately molding the holder body and the thermally-conductive insulating rubber without fixing the holder body to the thermally-conductive insulating rubber by insert molding; and inserting the elastic cylinders into the insertion holes.

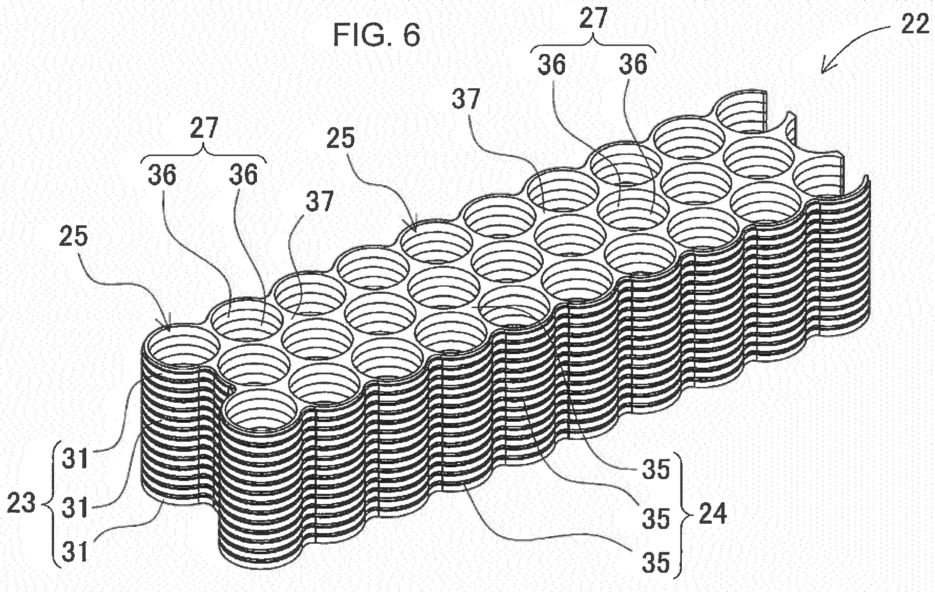

FIG. 6 to FIG. 8 show heat dissipating holder 22 having a different structure. In heat dissipating holder 22 shown in these diagrams, holder body 23 is a stacked body produced by stacking a plurality of thermally conductive plates 31 in the longitudinal direction of battery cells 1, thermally-conductive insulating rubber 24 is a stacked body of a plurality of insulating plates 35, and thermally conductive plates 31 and insulating plates 35 are stacked.

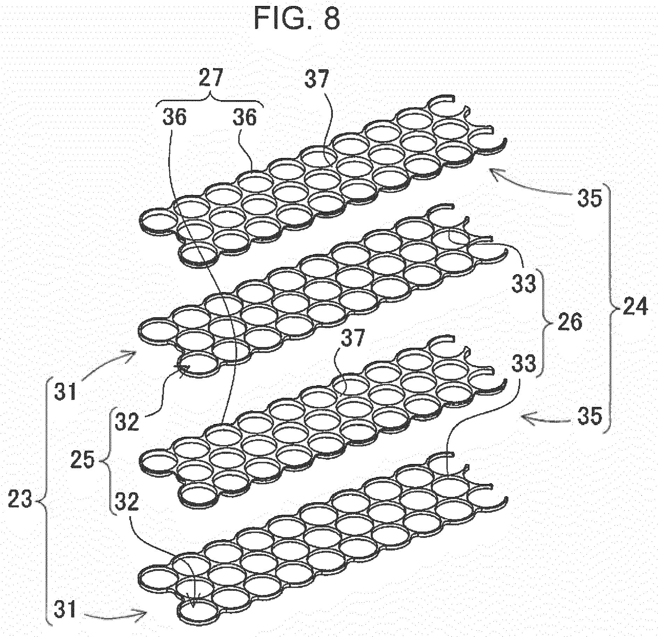

Each thermally conductive plate 31 is produced by pressing a metal plate made of aluminum or an aluminum alloy, and through holes 32 are arranged in a heaped bale structure. Thermally conductive plate 31 includes flat plate 33 around through holes 32 arranged into the heaped bale structure. In other words, through holes 32 are opened in flat plate 33. In the state where a plurality of thermally conductive plates 31 are stacked as shown in the sectional view of FIG. 8, cylindrical insertion hole 25 extending in the insertion direction of battery cell 1 is formed of a plurality of stacked through holes 32, and partition 26 formed by stacking a plurality of flat plates 33 is disposed around insertion hole 25.

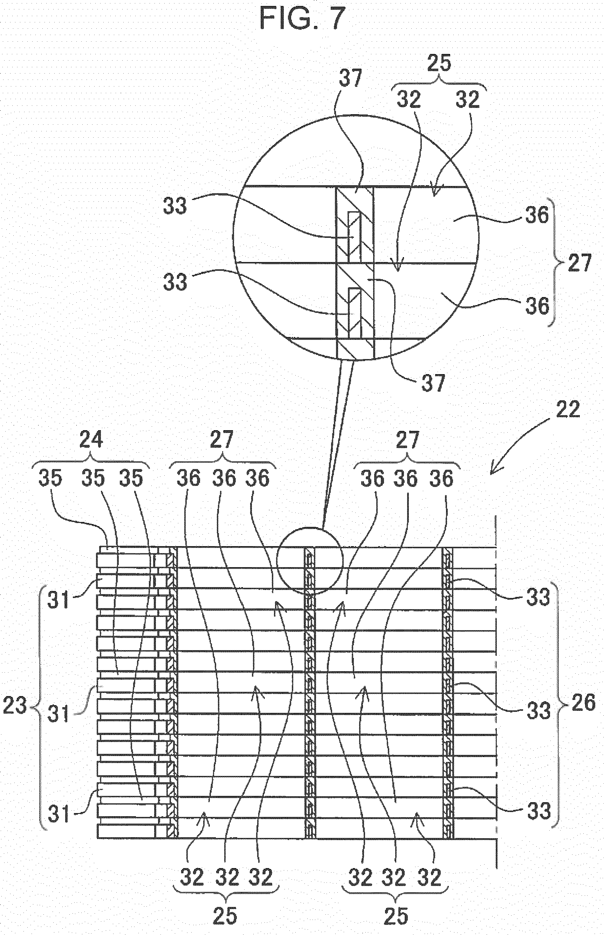

Insulating plates 35 are stacked while being interposed between thermally conductive plates 31 as shown in FIG. 7 and FIG. 8. Each insulating plate 35 includes insulating rings 36 to be disposed inside through holes 32 in each thermally conductive plate 31. Insulating plate 35 includes insulating rings 36 at the positions that face through holes 32 in thermally conductive plate 31 to be stacked, and insulating rings 36 are interconnected via flat portion 37. Insulating plates 35 are stacked while being interposed between thermally conductive plates 31, and insulating rings 36 are interconnected via flat portion 37 so that insulating rings 36 are disposed inside through holes 32. In the state where a plurality of insulating plates 35 are stacked as shown in the sectional view of FIG. 7, cylindrical elastic cylinder 27 extending in the insertion direction of battery cell 1 is formed of a plurality of stacked insulating rings 36. Although not shown, elastic projections may be formed using two-color molding, for example, on the inner surface of each insulating ring in the insulating plate. Alternatively, the insulating plate or insulating ring may be made of an elastic body. These elastic projections may be formed as ridges extending in the insertion direction of battery cell 1, similarly to elastic projections 8.

As shown in the exploded perspective view of FIG. 8, flat portion 37 of each insulating plate 35 is interposed between flat plates 33 of thermally conductive plates 31, and insulates thermally conductive plates 31 from each other. Furthermore, as shown in FIG. 7, flat portion 37 having through holes 32 of thermally conductive plate 31 on its opposite sides has a channel-shaped cross section and includes insulating rings 36 on its opposite sides, and insulating rings 36 on the opposite sides are disposed inside through holes 32 on the opposite sides. A flat portion having through hole 32 of thermally conductive plate 31 only on its one side - flat portion 37 disposed on the outer periphery of the insulating plate - includes insulating ring 36 connected to only its inside as the one side, and insulating ring 36 is disposed on the inner surface of through hole 32. Insulating plate 35 guides flat plate 33 of thermally conductive plate 31 to channel-shaped flat portion 37, and insulating plate 35 and thermally conductive plate 31 can be stacked at the fixed positions without causing displacement. Flat plate 33 of thermally conductive plate 31 is certainly insulated, and hence a short circuit caused by the contact of battery cell 1 with the exterior can is more certainly prevented.

In each insulating plate 35 shown in FIG. 6 to FIG. 8, thermally conductive plate 31 is fixed by insert-molding. Insulating plate 35 is molded by temporarily fixing thermally conductive plate 31 at a fixed position in a molding chamber of a die for molding insulating plate 35, and by injecting a liquid or paste-like resin into the molding chamber. The resin to be injected into the molding chamber is a heated and molten thermoplastic resin, or a resin taking a paste form in an uncured state. The resin injected into the molding chamber is cured and cooled, then the resin is taken out of the molding chamber, and thermally conductive plate 31 is insert-molded at the fixed position in insulating plate 35. In insulating plate 35 in which thermally conductive plate 31 is insert-molded, flat portion 37 does not necessarily need to have a channel-shaped cross section shown in FIG. 8, but may have a shape that covers the whole periphery of flat plate 33 of thermally conductive plate 31. This insulating plate can cover the thermally conductive plate without exposure, and hence can achieve a high insulating property.

Insulating plate 35 can be connected to thermally conductive plate 31, by separately molding thermally conductive plate 31 and insulating plate 35 without insert-molding of thermally conductive plate 31, inserting insulating ring 36 into through hole 32, and inserting flat plate 33 into flat portion 37 having the channel-shaped cross section.

Above-mentioned heat dissipating holder 22 allows inexpensive mass production of thermally conductive plates 31 by press working and inexpensive mass production of thin insulating plates 35 by molding, so that the manufacturing cost of heat dissipating holder 22 can be reduced. Heat dissipating holder 22 can be assembled by the following method: battery cells 1 are inserted into elastic cylinders 27 formed in insertion holes 25 in the state where a plurality of thermally conductive plates 31 and a plurality of insulating plates 35 are stacked as shown in FIG. 6; or thermally conductive plates 31 and insulating plates 35 are stacked while battery cells 1 are inserted into them.

In the battery pack of the present example, elastic projections 8 can be formed as ridges extending in the longitudinal direction of battery cell 1. The tip surfaces of the ridges can be made to elastically and closely contact the surface of battery cell 1.

In the battery pack of the present example, holder body 3 can be formed as a compact made of aluminum or an aluminum alloy.

In the battery pack of the present example, the outer surfaces of elastic cylinders 7 can be made to closely contact the inner surfaces of insertion holes 5 in the surface contact state.

In heat dissipating holder 2 of the battery pack of the present example, holder body 3 can be insert-molded and fixed in thermally-conductive insulating rubber 4.

In the battery pack of the present example, elastic cylinders 7 can be press-fitted into and fixed to insertion holes 5.

In the battery pack of another example, cylindrical cells are used as battery cells 1, insertion holes 5 or 25 of holder body 3 or 23 can be formed in columnar shapes, and elastic cylinders 7 or 27 can be formed in cylindrical shapes.

In the battery pack of another example, a silicon-based rubber-like elastic body can be used as thermally-conductive insulating rubber 24.

In the battery pack of another example, a rubber-like elastic body containing an added thermally conductive material can be used as thermally-conductive insulating rubber 24.

In the battery pack of another example, battery cells 1 inserted into heat dissipating holder 2 or 22 can be interconnected in series.

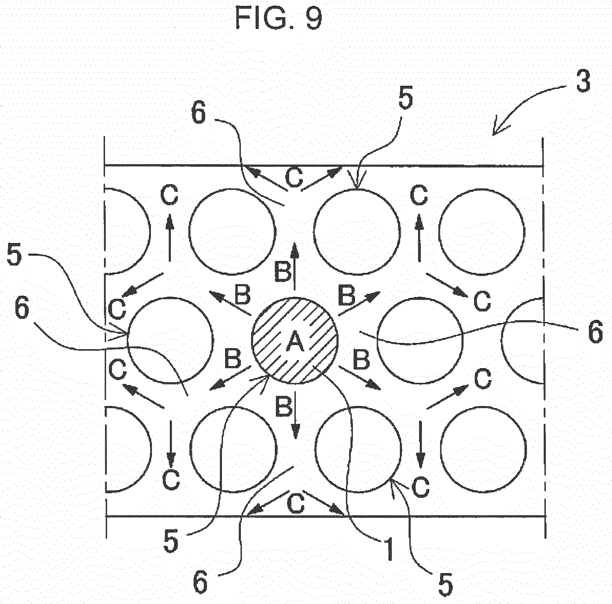

In the battery pack and heat dissipating holder of both examples, as shown in FIG. 9 and FIG. 10, insertion holes 5 or 45 are disposed in holder body 3 or 43, and battery cells 1 are inserted into the insertion holes. Therefore, the thermal energy of each battery cell 1 is conducted to surrounding partitions 6 or 46 as indicated by arrows in FIG. 9 and FIG. 10. The thermal energy having been conducted to partitions 6 or 46 is subsequently conducted to more outer periphery through partitions 6 or 46 between insertion holes 5 or 45. In the battery pack in which battery cells 1 are arranged into a heaped bale structure as shown in FIG. 9, the thermal energy of battery cell 1 indicated by A of FIG. 9 is conducted to six partitions 6 arranged radially around insertion hole 5 as indicated by arrows B. The thermal energy having been dispersedly conducted to six partitions 6 is branched as indicated by arrows C and is conducted to the outside. Therefore, the thermal energy of battery cell 1 is successively and dispersedly conducted to the outside via partitions 6, the thermal energy of battery cell 1 is efficiently absorbed, and the absorbed thermal energy is efficiently dissipated to the outside. Furthermore, in the battery pack in which battery cells 1 are arranged vertically and horizontally in a grid shape as shown in FIG. 10, the thermal energy of battery cell 1 indicated by D of FIG. 10 is conducted to four partitions 46 arranged radially around insertion hole 45 as indicated by arrows E. The thermal energy having been dispersedly conducted to four partitions 46 is subsequently branched as indicated by arrows F and is conducted to the outside. Therefore, in the battery pack and heat dissipating holder of both examples, even when any battery cell exhibits a thermal runaway and is heated to a high temperature, the thermal energy of the battery cell having generated heat is efficiently absorbed by its periphery, and the absorbed thermal energy is dispersed and dissipated to the outside. Thus, partitions are disposed around the whole peripheries of the battery cells, and the thermal energy of a battery cell can be efficiently conducted to the partitions in the holder body via the elastic cylinders. As a synergistic effect, the induction of a thermal runaway of a battery cell can be extremely effectively prevented.

### INDUSTRIAL APPLICABILITY

A battery pack of the present invention includes a plurality of battery cells, increases the output, capacity, and energy density, and also can prevent the induction of a thermal runaway of a battery cell to achieve a high safety. Therefore, the battery pack can be appropriately used as a power source for an electric assisted bicycle, an electric motorcycle, an electric tool, a hybrid car, or an electric vehicle.

### REFERENCE MARKS IN THE DRAWINGS

- 1: battery cell
- 2: heat dissipating holder
- 3: holder body
- 4: thermally-conductive insulating rubber
- 5: insertion hole
- 6: partition
- 7: elastic cylinder
- 8: elastic projection
- 9: connection portion
- 22: heat dissipating holder
- 23: holder body
- 24: thermally-conductive insulating rubber
- 25: insertion hole
- 26: partition
- 27: elastic cylinder
- 31: thermally conductive plate
- 32: through hole
- 33: flat plate
- 35: insulating plate
- 36: insulating ring
- 37: flat portion
- 43: holder body
- 45: insertion hole
- 46: partition

## Claims

1. A battery pack comprising:
a plurality of chargeable/dischargeable battery cells; and
a heat dissipating holder disposed among the plurality of battery cells and in contact with the plurality of battery cells in a thermally coupled state,
wherein the heat dissipating holder includes:
a holder body having insertion holes into which the plurality of battery cells are inserted; and
a thermally-conductive insulating rubber having elastic pipes to be disposed on inner surfaces of the insertion holes,
wherein each of the elastic pipes includes a plurality of elastic projections projecting on an inner surface, and an inner shape of each of the elastic pipes in a non-insertion state of the plurality of battery cells is made smaller than an outer shape of each of the plurality of battery cells, the plurality of elastic projections being elastically pressed on a surface of each of the plurality of battery cells,
wherein, in the heat dissipating holder, the plurality of battery cells inserted into the elastic pipes are disposed at fixed positions in an insulated state, and the elastic projections are elastically pressed on peripheries of the plurality of battery cells and closely contact the plurality of battery cells in a thermally coupled state, and
wherein a thermal energy of the plurality of battery cells is conducted to the holder body via the elastic pipes.

2. The battery pack according to claim 1, wherein
the plurality of elastic projections include ridges extending in a longitudinal direction of the plurality of battery cells, and tip surfaces of the ridges closely contact the surface of each of the plurality of battery cells.

3. The battery pack according to claim 1 or 2, wherein
the holder body includes a compact made of aluminum or an aluminum alloy.

4. The battery pack according to any one of claims 1 to 3, wherein
outer surfaces of the elastic pipes closely contact the inner surfaces of the insertion holes in a surface contact state.

5. The battery pack according to any one of claims 1 to 4, wherein
in the heat dissipating holder, the holder body is insert-molded and fixed in the thermally-conductive insulating rubber.

6. The battery pack according to any one of claims 1 to 4, wherein
the elastic pipes are press-fitted into and fixed to the insertion holes.

7. A battery pack comprising:
a plurality of chargeable/dischargeable battery cells; and
a heat dissipating holder disposed among the plurality of battery cells and in contact with the plurality of battery cells in a thermally coupled state,
wherein the heat dissipating holder includes:
a holder body having insertion holes into which the plurality of battery cells are inserted; and
a thermally-conductive insulating rubber having elastic pipes to be disposed on inner surfaces of the insertion holes,
wherein the holder body includes a stacked body formed by stacking a plurality of thermally conductive plates, and each of the plurality of thermally conductive plates includes a plurality of through holes in a predetermined array, the plurality of battery cells being inserted into the plurality of through holes,
wherein the thermally-conductive insulating rubber includes a stacked body of a plurality of insulating plates, and each of the plurality of insulating plates includes insulating rings to be disposed on inner surfaces of the plurality of through holes in corresponding ones of the plurality of thermally conductive plates,
wherein, in a state where the plurality of thermally conductive plates and the plurality of insulating plates are stacked in a longitudinal direction of the plurality of battery cells, each of the insertion holes is formed of one of the stacked through holes in the plurality of thermally conductive plates, and each of the elastic pipes is formed of one of the stacked insulating rings in the plurality of insulating plates, and
wherein, in the heat dissipating holder, the plurality of battery cells inserted into the elastic pipes are disposed at fixed positions in an insulated state, and a thermal energy of the plurality of battery cells is conducted to the holder body via the elastic pipes.

8. The battery pack according to any one of claims 1 to 7, wherein
the plurality of battery cells include cylindrical cells, the insertion holes in the holder body each have a columnar shape, and the elastic pipes each have a cylindrical shape.

9. The battery pack according to any one of claims 1 to 8, wherein
the thermally-conductive insulating rubber includes a silicon-based or fluorine-based rubbery elastic body.

10. The battery pack according to any one of claims 1 to 9, wherein
the thermally-conductive insulating rubber includes a rubbery rubber-like elastic body containing an added thermally conductive material.

11. The battery pack according to any one of claims 1 to 10, wherein
the plurality of battery cells inserted into the heat dissipating holder are interconnected in series.

12. A heat dissipating holder disposed among a plurality of battery cells and in contact with the plurality of battery cells in a thermally coupled state, the heat dissipating holder comprising:
a holder body having insertion holes into which the plurality of battery cells are inserted; and
a thermally-conductive insulating rubber having elastic pipes to be disposed on inner surfaces of the insertion holes,
wherein each of the elastic pipes includes a plurality of elastic projections projecting on an inner surface, and an inner shape of each of the elastic pipes in a non-insertion state of the plurality of battery cells is made smaller than an outer shape of each of the plurality of battery cells, the plurality of elastic projections being elastically pressed on a surface of each of the plurality of battery cells,
wherein the plurality of battery cells inserted into the elastic pipes are disposed at fixed positions in an insulated state, and the elastic projections are elastically pressed on peripheries of the plurality of battery cells and closely contact the plurality of battery cells in a thermally coupled state, and
wherein a thermal energy of the plurality of battery cells is conducted to the holder body via the elastic pipes.

13. A heat dissipating holder disposed among a plurality of battery cells and in contact with the plurality of battery cells in a thermally coupled state, the heat dissipating holder comprising:
a holder body having insertion holes into which the plurality of battery cells are inserted; and
a thermally-conductive insulating rubber having elastic pipes to be disposed on inner surfaces of the insertion holes,
wherein the holder body includes a stacked body formed by stacking a plurality of thermally conductive plates, and each of the plurality of thermally conductive plates includes a plurality of through holes in a predetermined array, the plurality of battery cells being inserted into the plurality of through holes,
wherein the thermally-conductive insulating rubber includes a stacked body of a plurality of insulating plates, and each of the plurality of insulating plates includes insulating rings to be disposed on inner surfaces of the plurality of through holes in corresponding ones of the plurality of thermally conductive plates,
wherein, in a state where the plurality of thermally conductive plates and the plurality of insulating plates are stacked in a longitudinal direction of the plurality of battery cells, each of the insertion holes is formed of one of the stacked through holes in the plurality of thermally conductive plates, and each of the elastic pipes is formed of one of the stacked insulating rings in the plurality of insulating plates, and
wherein the plurality of battery cells inserted into the elastic pipes are disposed at fixed positions in an insulated state, and a thermal energy of the plurality of battery cells is conducted to the holder body via the elastic pipes.
